# EUROPEAN PATENT SPECIFICATION

(11) **EP 2 210 039 B1**
(45) Date of publication and mention of the grant of the patent: **27.01.2016**
(21) Application number: 07871522.4
(22) Date of filing: 19.11.2007
(51) Int. Cl.: F21V 9/00, H05B 33/08, H05B 35/00, H05B 39/00

(54) **HYBRID ILLUMINATION APPARATUS AND METHOD**
HYBRIDBELEUCHTUNGSVORRICHTUNG UND -VERFAHREN
APPAREIL ET PROCÉDÉ D'ÉCLAIRAGE HYBRIDE

(43) Date of publication of application: 28.07.2010
(73) Proprietor: Schott Corporation, Elmsford, New York 10523 (US)
(72) Inventor: ABEL, Robert, E., Southbridge, MA 01550 (US)
(74) Representative: Vossius & Partner Patentanwälte Rechtsanwälte mbB
(86) International application number: PCT/US2007/085074
(87) International publication number: WO 2009/067106

(56) References cited:
- EP-A1- 1 291 711
- US-A- 6 033 084
- US-A1- 2005 259 416
- US-A1- 2007 076 426
- US-A1- 2007 076 426
- US-A1- 2007 160 373
- US-A1- 2007 239 992

## Description

### Background Of The Invention

### 1) Field Of The Invention

Embodiments of the invention are most generally related to the field of illumination and colorimetry apparatus and methods. More particularly, embodiments of the invention are directed to a hybrid broadband/narrowband, coaxial illumination apparatus, system, and associated methods.

### 2) Description Of The Related Art

Everything depends on light to be seen; thus the design and application of illumination apparatus and methods, while relatively simple in theory, has critical practical importance. The attributes of the object being illuminated as well as the purpose for illuminating it represent critical parameters that must be considered in the design of an illumination system. For example, the illumination of a parking lot, a piece of jewelry in a display case, and an object field for detecting motion by an intruder in the field will each require a particular illumination spectrum, or suitable combination of spectra, a appropriate detector (e.g., the eye, a CCD, etc.), as well as the right propagation medium to achieve optimum results. Thus various illumination systems may be designed for inspection viewing, showcasing, large and small area illumination, proximity detection, and many other applications.

Typical incandescent light bulbs provide a reasonably broad illumination spectrum for general lighting. Regular incandescent bulbs, however, are highly inefficient. The tungsten filament of a typical incandescent light bulb has a lifetime of between about 700-1000 hours. Moreover, about 90% of the radiation emitted by a typical incandescent bulb is in the form of heat (i.e., infra-red (IR) radiation) rather than light, yet lighting is the main function of a light bulb.

A halogen lamp is a type of incandescent lamp. It has a tungsten filament just like a regular incandescent bulb. Due to the well known regenerative cycle facilitated by a halogen gas, the tungsten filament in a halogen lamp remains more robust than in a regular incandescent bulb for a longer period of time, thus giving longer life under normal operating conditions.

Color temperature is a way of measuring and describing the color quality of light by comparing it to a theoretical black body heated to a specified temperature on the Kelvin scale. On the conventional color temperature scale, a typical tungsten-filament light bulb has a color temperature of about 2,800 Kelvin (K), which is a measure of the color quality ('whiteness') of the light. The standard reference of daylight has a color temperature of 5,000K. Comparatively, a halogen source has a color temperature of about 3,200K (depending on driving voltage). Practically speaking, then, a halogen source will produce both hotter and brighter light than standard incandescent illumination. A low color temperature implies warmer (more yellow/red) light while a high color temperature implies a colder (more blue) light.

Unlike a blackbody that emits a smooth distribution of wavelengths across the visible spectrum, many light sources have sharp peaks or deep dips in their light intensity at certain wavelengths in the band(s) of wavelengths over which they emit. Such non-blackbody sources include fluorescent tubes, LEDs, and vapor lamps, for example. For these sources, the light quality metric is referred to as their correlated color temperature (CCT). CCT is a measure of the relative amounts of red, green and blue light (the color appearance of the light) these sources emit. The combination of red, green and blue LEDs is known from, inter alia, EP 129 1711. The combination of LEDs with halogen and filament light sources is know , inter alia, from US 2005 259416 and US 2007 076 426.

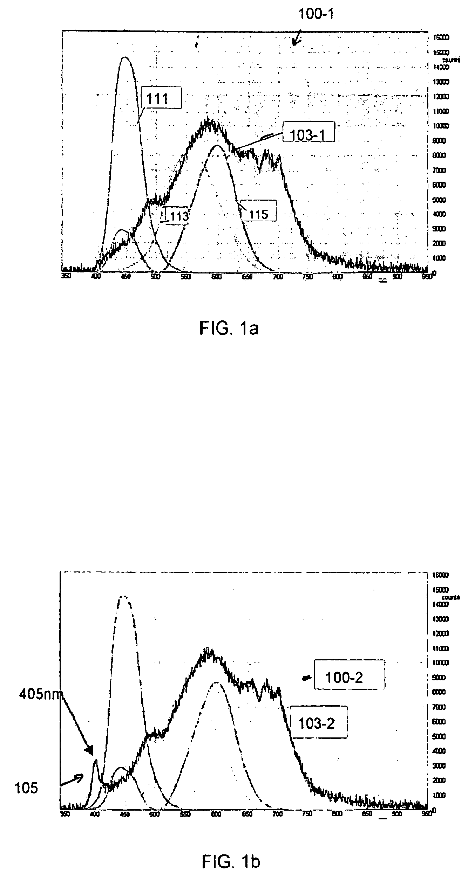

Figure 1a shows an intensity spectrum from a broadband halogen source under typical operating conditions. Outputs from a red, green, and blue LED are also shown. Figure 1b shows the output spectrum when 405 nanometer (nm) light was added from an LED. At wavelengths between about 400-420nm, the halogen light intensity is relatively low. One known solution to increase the light intensity in this wavelength band is to drive the halogen light source with more power (current) until the output at the desired wavelength is sufficient to meet the requirement of the intended application. This solution, however, has several disadvantages. The primary disadvantage is inefficiency due to the spectral response inherent to halogen sources. Specifically, at wavelengths <420nm, halogen sources require much hotter filaments to provide the necessary output for some applications. This can cause shorter life and broadband correlated color temperature shifts that may not be desired in the application. Second, this technique provides no control of output CCT, or spectral output, other than filament design and current tradeoffs. Furthermore, although the combination of red, green, and blue light from an LED-based source may provide the desired spectral coverage, the spectrum may lack the desired degree of uniformity (flatness), which could cause problems in applications with subsequent bandpass filtering, for example.

The inventor has recognized the benefits and advantages associated with systems, apparatus, and methods that address the stated and other known shortcomings in the art. Some of these advantages include, but are not limited to, providing a currently unavailable custom lighting solution by shifting the CCT of the source while at the same time providing a flatter spectral output than provided *via* a RGB LED solution; providing a more efficient solution through targeted output without a corresponding increase in system power requirements; and, providing application flexibility by combining multi-system functionality into a single system solution.

Embodiments of the invention are directed to apparatus and methods that address the foregoing mentioned shortcomings and disadvantages associated with current technology in this field.

### Brief Summary of the Invention

An embodiment of the invention is directed to a hybrid illumination device. The device includes a device housing; a first illumination source mounted in the device housing that emits a first selected spectral output; a condenser optical element having an optical axis, mounted in the device housing and disposed to receive the first selected spectral output and propagate said output along the optical axis; a second illumination source disposed in the device housing that emits a second selected spectral output along a second illumination source propagation path, and an optical waveguide component having an input end and an output end, that is at least partially disposed in the device housing to receive at the input end the first spectral output and the second spectral output, and further wherein a desired spectral profile comprising at least a portion of the first selected spectral output and the second selected spectral output are discharged at the output end. According to an aspect, the optical axis along which the first illumination source output is directed and the second illumination source propagation path are coaxially aligned prior to entering the propagation medium. According to an exemplary aspect, the first illumination source has a broadband visible spectrum and the second illumination source has a narrowband infra-red spectrum. In an aspect, the spectra at least partially overlap. According to an aspect, the second illumination source has a spectral peak intensity that is significantly greater than the first illumination source intensity in the region of the second source spectral peak. In an exemplary aspect, the first illumination source is a halogen source and the second illumination source is a 405nm light emitting diode (LED). In a particular aspect, the second illumination source is mounted within the condenser optical element. In an alternative aspect, the second illumination source is mounted adjacent the condenser in such a manner that the first and second illumination outputs are directed into the propagation medium. According to an aspect, the device includes a spectral filter disposed to filters a portion of the broadband source that overlaps the spectral bandwidth of the narrowband source. According to an aspect, the device includes a sub-housing containing at least the broadband source that is removably, magnetically connected to the housing.

An embodiment of the invention is directed to a hybrid proximity illumination and detection system. The system includes a housing; a first illumination source having a broadband spectral output removably mounted in the housing; a second illumination source having a narrowband spectral output mounted in the housing, wherein at least an unfiltered portion of the broadband spectral output overlaps at least a portion of the narrowband spectral output; an optical component disposed in the housing that directs at least one of the first and second illumination source outputs to an input of a propagation medium; an illumination propagation medium that transmits the combined first and second illumination source outputs to a target destination and which transmits at least a portion of the illumination reflected from the target destination to a receiving destination; and, a receiver at the receiving destination that receives at least a portion of the IR portion of the combined illumination reflected from the target destination. In an aspect, the system further includes a filter in cooperative engagement with the first illumination source that filters the overlapping portion of the broadband spectral output and/or a filter in cooperative engagement with the receiver that discriminates the IR illumination reflected from the target destination. According to an aspect, the illumination propagation medium is a fiber bundle having at least one fiber that propagates the combined illumination to the target destination and at least one other fiber that propagates the target destination-reflected IR illumination. According to an aspect, the system includes a sub-housing that is magnetically, removably mounted in the housing, and which includes the first illumination source. In an aspect of the system, the first illumination source output and the second illumination source output have coaxial propagation paths adjacent the input of the propagation medium.

An embodiment of the invention is directed to a method of providing a customized illumination solution. The method involves the steps of providing a first illumination having a definable color temperature; providing a second illumination having a narrowband spectrum relative to a broadband spectrum of the first illumination; shifting the color temperature of the first illumination in a substantially power-independent manner by optically combining at least a spectral portion of the first illumination and the second illumination, wherein an output illumination from the illumination device has a selectively modified correlated color temperature (CCT) that is different than the color temperature of the first illumination. According to an aspect, the method includes the step of propagating the combined illuminations along a coaxial propagation path. In an aspect, the method includes the step of filtering a portion of the broadband spectrum of the first illumination that coincides with the narrowband spectrum of the second illumination. In an exemplary aspect, the method comprises providing a halogen first illumination and an infra-red second illumination. In an aspect, the method comprises modulating the second illumination. In an aspect, the coaxial propagation paths are input to an input end of the optical waveguide.

The characteristics and attributes of the foregoing embodiments and related aspects will be more apparent in view of the attached drawings and the detailed description below.

### Brief Description of the Several Views of the Drawings

The accompanying drawings illustrate various exemplary and illustrative embodiments and aspects of the invention. In the drawings:
Figure 1a shows an intensity spectrum from a broadband halogen source;
Figure 1b shows the halogen output spectrum when 405 nanometer (nm) light was added from an LED;
Figure 2 is a top plan schematic view of a hybrid, coaxial illumination device according to an exemplary embodiment of the invention;
Figures 3a and 3b, respectively, are a side cross sectional schematic view and a front elevation schematic view of the illumination sources in a hybrid, coaxial illumination device according to an exemplary embodiment of the invention;
Figure 4 is a photo-copy showing an LED and its lens embedded in the center of a halogen condenser according to an illustrative aspect of the invention;
Figure 5 is a top plan schematic view of a removable, magnetically attachable sub-housing assembly according to an illustrative aspect of the invention; and
Figure 6 is a schematic diagram of a proximity illumination/detection system according to an exemplary embodiment of the invention.

### Detailed Description of the Invention

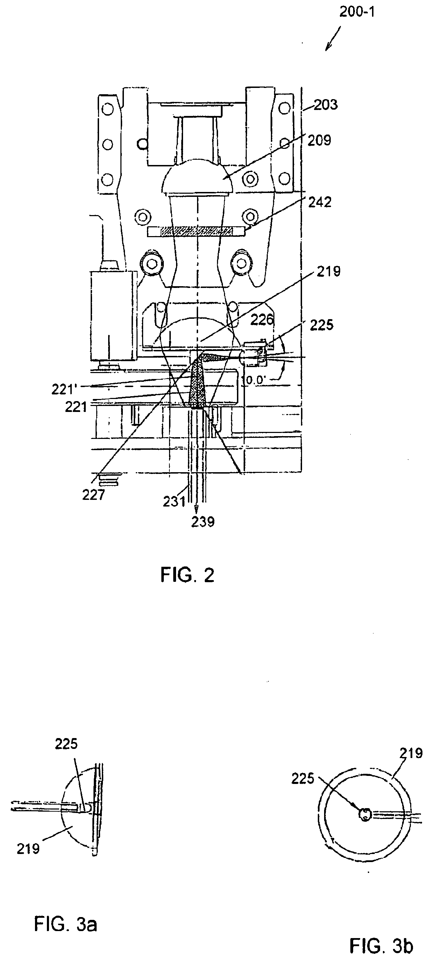

Figure 2 schematically illustrates a hybrid, coaxial illumination device 200-1 according to an exemplary embodiment of the invention. The device includes a device housing 203. Attached directly or indirectly to the housing is a first illumination source 209 that in this exemplary aspect is a tungsten-filament halogen lamp 209. The first illumination source is intended to be a visible broadband source that has an identifiable color temperature (CT) or correlated color temperature (CCT). The halogen source 209 has a CT of about 3,200K. The graph 100-1 in Fig. 1a shows the halogen output spectrum 103-1 as a function of intensity, in an exemplary aspect. The graph 100-1 also shows the spectra 111, 113, 115, respectively, of a blue, a green, and a red LED and indicates that the intensity from these typical sources is not particularly uniform (flat) over their total bandwidth. One can observe that the intensity of the halogen spectrum falls off from a peak at about 580nm to near zero at about λ≤400nm.

An optical condenser 219 is positioned optically downstream of the halogen source 209. The condenser 209 collects the halogen illumination and directs it along the optical axis 221 of the condenser. The device also includes a second illumination source 225 that in this exemplary aspect is a light emitting diode (LED) having a spectral peak at 405nm +5nm. The LED can be in die form or packaged in any number of commercially available forms. As shown, the LED 225 is thermally mounted to a lens mounting bracket 220. A beam steering component 227 is disposed along the optical axis 221 to steer the LED output along a path 221' that is coaxially aligned with the optical axis 221. The second illumination source can be internally or externally modulated as may be desired.

As is further shown in Fig. 2, an optical waveguide 231 having an input end 237 disposed in the housing 201 is aligned such that the combined, coaxial output of the first and second illumination sources 209, 225 are incident on the input end 237 such that the waveguide propagates the combined illumination to an output end 239 (not shown in this figure) of the waveguide. In an exemplary aspect, the waveguide is a commercially available fiber bundle. In a particular aspect, the fiber bundle has a 4mm active input area. An auxiliary optical component may be used to input- (and output-) couple the illumination.

Also shown in Fig. 2 is an IR filter 242 that can optionally be used to filter out spectral components from the broadband spectrum that may overlap the spectral output of the narrowband LED.

The graph 100-2 in Fig. 1b shows the output intensity spectrum 103-2 of the hybrid illumination of the broadband halogen source and the narrowband LED. One can observe the spectral contribution added by the LED at reference 105.

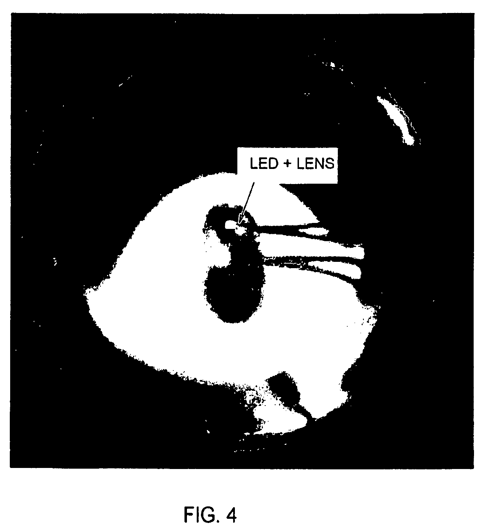

According to an exemplary alternative aspect as illustrated in Figs. 3a and 3b, the narrowband-emitting, second illumination LED source 225 is mounted directly in the condenser element 219 in a center region thereof (i.e., along the optical axis 221). Accordingly, the auxiliary component 227 is unnecessary. The combined output of the halogen source and the LED propagate coaxially to the input 237 of the fiber bundle 231 as before. Figure 4 is a photo showing the LED (and its lens) embedded in the center of the halogen condenser as viewed from the waveguide side of the device.

The embodied device provides an apparatus improvement to target specific illumination wavelengths (e.g., 405nm) while at the same time providing broadband (visible) illumination. The embodied apparatus delivers improved efficiency by reducing the power level needed for the broadband source if, and where, it falls short only at a specific desired wavelength(s). Prior devices required that the power level of the broadband source be increased until the output at the desired wavelength with the lowest intensity was achieved for the intended application. For a typical halogen sources, this resulted in much hotter filaments, shorter life, and uncontrollable and/or undesired broadband correlated color temperature shifts for the application at hand. With the addition of the LED, the CCT of the source can selectively be shifted to provide a custom solution, while at the same time providing a flatter spectral output than a RGB LED solution would provide.

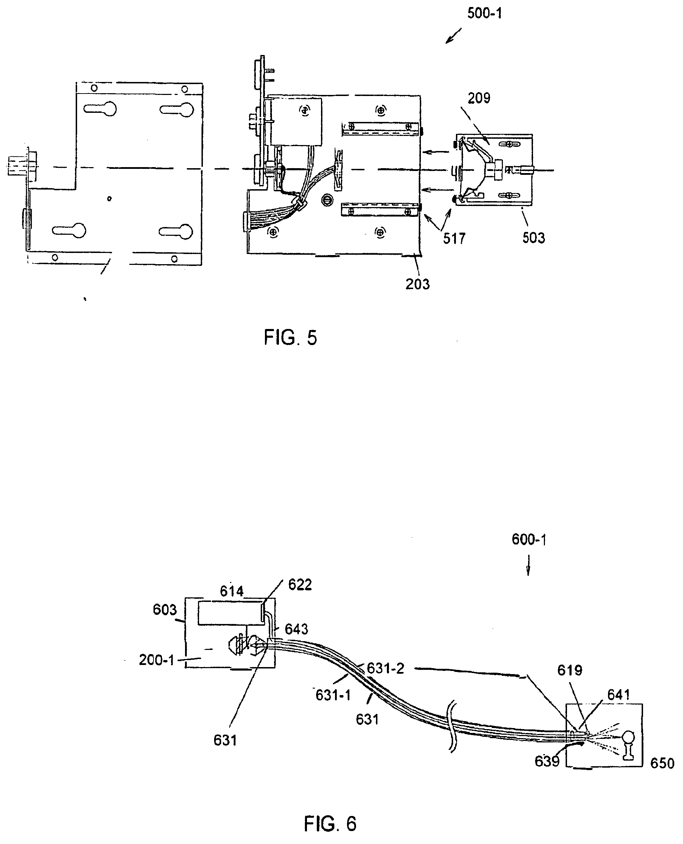

Regardless of the condenser/LED configurations presented above, the device may include a sub-housing 503 as illustrated schematically by 500-1 in Fig. 5. According to this illustrative aspect, the halogen source 209 is mounted in the sub-housing 509. The sub-housing include tracks or rails, or other structural configuration as known in the art, that provides a removable, secure connection to the housing 203. The sub-housing 503 and the housing 203 each contain complimentary magnets 517 that secure the sub-housing in the housing. Electrical and optical connections, as well as guide pins and other sufficient and necessary operational components are known in the art and require no further discussion here. The instant construction provides a convenient and efficient means to have access to the halogen source should it require service or replacement.

Another embodiment of the invention is directed to a combination illumination/proximity detection system 600-1 as shown schematically in Fig. 6. The system 600-1 includes a housing with a hybrid broadband/narrowband illumination device 200-1 as illustrated in Figs. 2 and 3 and described herein above. Thus the system includes a first illumination source having a broadband spectral output, that is removably mounted in the housing (refer, e.g., to Fig. 5 and related description); a second illumination source having a narrowband spectral output mounted in the housing, wherein at least an unfiltered portion of the broadband spectral output overlaps the narrowband spectral output; and an optical component (e.g., optical condenser) disposed in the housing that directs at least the first illumination source output to an input of a propagation medium, wherein the first spectral output and the second spectral output have coaxial propagation paths adjacent the input of the propagation medium.

The system 600-1 further includes an IR receiver 614 that may include a demodulator if the LED IR output was modulated.

The illumination propagation medium that transmits the combined first and second illumination source outputs, in this embodiment, is a fiber bundle 631. The fiber bundle has at least one fiber waveguide 631-1 having an input end 637 that receives the combined broadband/narrowband illumination outputs. The fiber 631-1 has an output end 639 that emits the hybrid illumination to illuminate a target scene 650. In the illustrative aspect as shown, the target scene is an object in a display. The fiber bundle 631 also has at least one fiber waveguide 631-2 having an input end 641 that receives light reflected from the target scene. An auxiliary optical element 619 may be provided to assist in collecting and directing reflected IR target light into the input end 641 of fiber 631-2. The fiber 631-2 transmits the target-reflected light to an output end 643 that is coupled to the receiver 614. The receiver may contain a filter 622 that discriminates the narrowband IR light reflected from the target scene.

According to the embodiment, the broadband illumination illuminates the target scene for viewing an object, for example. Modulated IR light is reflected from the object and detected by the receiver. If, for example, the object is removed, the amount or intensity of the detected IR light at the receiver changes. This change can be used to set off an alarm or otherwise provide notification of a conditional change in the target scene.

It can be understood from the foregoing description that an embodiment of the invention provides a method for providing a customized illumination solution. According to an exemplary method, a first illumination having a definable color temperature is provided. This will advantageously be a broadband visible spectrum. A second illumination having a narrowband spectrum relative to a broadband spectrum of the first illumination is further provided. The color temperature of the first illumination can be modified in a substantially power-independent manner (i.e., without adjusting the power input to the broadband illumination source) by optically combining at least a spectral portion of the first illumination and the second illumination, resulting in a hybrid output illumination having a selectively modified correlated color temperature (CCT) that is different than the color temperature of the first illumination. The broadband and narrowband illuminations are advantageously combined along coaxial propagation paths. Various filters may be provided to filter a portion of the broadband spectrum of the first illumination that coincides with the narrowband spectrum of the second illumination and/or to discriminate the detected IR signal light at a receiver. Broadband halogen illumination and narrowband IR illumination having a spectral peak at around 405nm provide advantageous illumination for a variety of applications.

## Claims

1. A hybrid illumination device, comprising:
a device housing (201);
a first illumination source (209) mounted in the device housing (201) that emits a first selected spectral output;
a condenser optical element (219) having an optical axis (221), mounted in the device housing (201) and disposed to receive the first selected spectral output and propagate said output along the optical axis (221);
a second illumination so (225) disposed in the device, that emits a second selected spectral output having a narrowband spectrum relative to a broadband spectrum of the first illumination source along a second illumination source propagation path, wherein the optical axis and the second illumination source propagation path are coaxially aligned; and
an optical waveguide component (231) having an input end (237) an output end, that is at least partially disposed in the device housing (201) to receive at the input end (237) the first spectral output and the second spectral output, and further wherein a desired spectral profile comprising at least a portion of the first selected spectral output and the second selected spectral output are discharged at the output end.

2. The device of claim 1, wherein the first illumination source (209) is a broadband spectral

3. The device of claim 2, wherein the second illumination source (225) emits a spectrum having an intensity peak in a low intensity bandwidth of the first illumination source spectrum.

4. The device of claim 1, wherein the first illumination source (209) is a halogen source.

5. The device of claim 1, wherein the second illumination source (225) is a light emitting diode.

6. The device of claim 5, wherein the light emitting diode has a spectral output peak at substantially 405 nanometers.

7. The device of claim 1, wherein the second illumination source (225) is disposed within the condenser optical element (219).

8. The device of claim 1, further comprising an auxiliary optical component mounted in the device that is disposed to intercept the spectral output from the second illumination source (225) and propagate said output along the optical axis.

9. The device of claim 1, wherein the second illumination sources (225) one of an internally modulated and an externally modulated source.

10. The device of claim 2, further comprising a spectral filter mounted in the device and disposed in such a manner that it filters a spectral portion of the broadband source that overlaps the spectral bandwidth of the narrowband source.

11. The device of claim 1, wherein the first illumination source (209) is a component of a first illumination source assembly, further wherein the device housing (201) and the first illumination source assembly include at least two magnets disposed in such a manner that the first illumination source assembly is removably, magnetically mounted in the device housing.

12. A method for providing a customized illumination solution, comprising:
providing a first illumination (209) having a definable color temperature;
providing a second illumination (225) having a narrowband spectrum relative to a broadband spectrum of the first illumination;
shifting the color temperature of the first illumination (209) in a substantially power-independent manner by optically combining at least a spectral portion of the first illumination and the second illumination, wherein optically combining the at least a spectral portion of the first illumination and the second illumination (225) comprises propagating the combined illumination along a coaxial propagation path and wherein an output illumination from the illumination device has a selectively modified correlated color temperature (CCT) that is different than the color temperature of the first illumination.

13. The method of claim 12, further comprising
filtering a portion of the broadband spectrum of the first illumination (209) that coincides with the narrowband spectrum of the second illumination (225).

## Patentansprüche

1. Hybridbeleuchtungsvorrichtung, die aufweist:
ein Vorrichtungsgehäuse (201);
eine erste Beleuchtungsquelle (209), die in dem Vorrichtungsgehäuse (201) montiert ist und eine erste ausgewählte spektrale Ausgangsleistung emittiert;
ein optisches Kondensorelement (219) mit einer optischen Achse (221), das in dem Vorrichtungsgehäuse (201) montiert ist und angeordnet ist, um die erste spektrale Ausgangsleistung zu empfangen und die Ausgangsleistung entlang der optischen Achse (221) auszubreiten;
eine zweite Beleuchtungsquelle (225), die in der Vorrichtung angeordnet ist und eine zweite spektrale Ausgangsleistung mit einem Schmalbandspektrum relativ zu einem Breitbandspektrum der ersten Beleuchtungsquelle entlang eines zweiten Beleuchtungsquellenausbreitungswegs emittiert, wobei die optische Achse und der zweite Beleuchtungsquellenausbreitungsweg koaxial ausgerichtet sind; und
eine optische Wellenleiterkomponente (231) mit einem Eingangsende (237) und einem Ausgangsende, das wenigstens teilweise in dem Vorrichtungsgehäuse (201) angeordnet ist, um an dem Eingangsende (237) die erste spektrale Ausgangsleistung und die zweite spektrale Ausgangsleistung zu empfangen, und wobei ein gewünschtes Spektralprofil, das wenigstens einen Teil der ersten ausgewählten spektralen Ausgangsleistung und der zweiten ausgewählten spektralen Ausgangsleistung aufweist, an dem Ausgangsende abgegeben wird.

2. Vorrichtung nach Anspruch 1, wobei die erste Beleuchtungsquelle (209) eine Breitbandspektralquelle ist und die zweite Beleuchtungsquelle eine Schmalband-Infrarotspektralquelle ist.

3. Vorrichtung nach Anspruch 2, wobei die zweite Beleuchtungsquelle (225) ein Spektrum emittiert, das eine Intensitätsspitze in einer Bandbreite mit niedriger Intensität des ersten Beleuchtungsquellenspektrums hat.

4. Vorrichtung nach Anspruch 1, wobei die erste Beleuchtungsquelle (209) eine Halogenquelle ist.

5. Vorrichtung nach Anspruch 1, wobei die zweite Beleuchtungsquelle (225) eine Leuchtdiode ist.

6. Vorrichtung nach Anspruch 5, wobei die Leuchtdiode eine spektrale Ausgangsleistungsspitze im Wesentlichen bei 405 Nanometern hat.

7. Vorrichtung nach Anspruch 1, wobei die zweite Beleuchtungsquelle (225) innerhalb des optischen Kondensorelements (219) angeordnet ist.

8. Vorrichtung nach Anspruch 1, die ferner eine optische Hilfskomponente aufweist, die in der Vorrichtung montiert ist, die angeordnet ist, um die spektrale Ausgangsleistung von der zweiten Beleuchtungsquelle (225) aufzufangen und die Ausgangsleistung entlang der optischen Achse auszubreiten.

9. Vorrichtung nach Anspruch 1, wobei die zweite Beleuchtungsquelle (225) eine intern modulierte oder eine extern modulierte Quelle ist.

10. Vorrichtung nach Anspruch 2, die ferner ein Spektralfilter aufweist, das in der Vorrichtung montiert ist und in einer derartigen Weise angeordnet ist, dass es einen Spektralanteil der Breitbandquelle filtert, der die spektrale Bandbreite der Schmalbandquelle überlappt.

11. Vorrichtung nach Anspruch 1, wobei die erste Beleuchtungsquelle (209) eine Komponente einer ersten Beleuchtungsquellenanordnung ist, wobei das Vorrichtungsgehäuse (201) und die erste Beleuchtungsquellenanordnung ferner wenigstens zwei Magnete umfassen, die in einer derartigen Weise angeordnet sind, dass die erste Beleuchtungsquelle entfernbar magnetisch in dem Vorrichtungsgehäuse montiert ist.

12. Verfahren zur Bereitstellung einer maßgeschneiderten Beleuchtungslösung, das aufweist:
Bereitstellen einer ersten Beleuchtung (209) mit einer definierbaren Farbtemperatur;
Bereitstellen einer zweiten Beleuchtung (225) mit einem Schmalbandspektrum relativ zu einem Breitbandspektrum der ersten Beleuchtung;
Verschieben der Farbtemperatur der ersten Beleuchtung (209) in einer im Wesentlichen leistungsunabhängigen Weise durch optisches Kombinieren wenigstens eines spektralen Teils der ersten Beleuchtung und der zweiten Beleuchtung, wobei das optische Kombinieren des wenigstens einen spektralen Teils der ersten Beleuchtung und der zweiten Beleuchtung (225) das Ausbreiten der kombinierten Beleuchtung entlang eines koaxialen Ausbreitungswegs aufweist und wobei eine Ausgangsbeleuchtung von der Beleuchtungsvorrichtung eine selektiv modifizierte korrelierte Farbtemperatur (CCT) hat, die sich von der Farbtemperatur der ersten Beleuchtung unterscheidet.

13. Verfahren nach Anspruch 12, das ferner aufweist:
Filtern eines Teils des Breitbandspektrums der ersten Beleuchtung (209), der mit dem Schmalbandspektrum der zweiten Beleuchtung (225) zusammenfällt.

## Revendications

1. Dispositif d'éclairage hybride, comprenant :
un boîtier de dispositif (201) ;
une première source d'éclairage (209) montée dans le boîtier de dispositif (201), qui émet une première sortie spectrale sélectionnée ;
un élément optique de condenseur (219) présentant un axe optique (221) monté dans le boîtier de dispositif (201) et disposé de manière à recevoir la première sortie spectrale sélectionnée, et à propager ladite sortie le long de l'axe optique (221) ;
une seconde source d'éclairage (225) disposée dans le dispositif, qui émet une seconde sortie spectrale sélectionnée présentant un spectre à bande étroite relativement à un spectre à large bande de la première source d'éclairage le long d'un second chemin de propagation de source d'éclairage, dans lequel l'axe optique et le second chemin de propagation de source d'éclairage sont alignés de manière coaxiale ; et
un composant de guide d'ondes optique (231) présentant une extrémité d'entrée (237) et une extrémité de sortie, qui est au moins partiellement disposé dans le boîtier de dispositif (201) en vue de recevoir, au niveau de l'extrémité d'entrée (237), la première sortie spectrale et la seconde sortie spectrale, et dans lequel en outre un profil spectral souhaité comprenant au moins une partie de la première sortie spectrale sélectionnée et de la seconde sortie spectrale sélectionnée est déchargé au niveau de l'extrémité de sortie.

2. Dispositif selon la revendication 1, dans lequel la première source d'éclairage (209) est une source spectrale à large bande et la seconde source d'éclairage est une source spectrale infrarouge à bande étroite.

3. Dispositif selon la revendication 2, dans lequel la seconde source d'éclairage (225) émet un spectre présentant une crête d'intensité dans une largeur de bande d'intensité faible du premier spectre de source d'éclairage.

4. Dispositif selon la revendication 1, dans lequel la première source d'éclairage (209) est une source halogène.

5. Dispositif selon la revendication 1, dans lequel la seconde source d'éclairage (225) est une diode électroluminescente.

6. Dispositif selon la revendication 5, dans lequel la diode électroluminescente présente une crête de sortie spectrale à 405 nanomètres sensiblement.

7. Dispositif selon la revendication 1, dans lequel la seconde source d'éclairage (225) est disposée au sein de l'élément optique de condenseur (219).

8. Dispositif selon la revendication 1, comprenant en outre un composant optique auxiliaire monté dans le dispositif, lequel est disposé de manière à intercepter la sortie spectrale en provenance de la seconde source d'éclairage (225) et à propager ladite sortie le long de l'axe optique.

9. Dispositif selon la revendication 1, dans lequel la seconde source d'éclairage (225) est l'une parmi une source à modulation interne et une source à modulation externe.

10. Dispositif selon la revendication 2, comprenant en outre un filtre spectral monté dans le dispositif et disposé de telle manière qu'il filtre une partie spectrale de la source à large bande qui chevauche la largeur de bande spectrale de la source à bande étroite.

11. Dispositif selon la revendication 1, dans lequel la première source d'éclairage (209) est un composant d'un premier assemblage de sources d'éclairage, dans lequel en outre le boîtier de dispositif (201) et le premier assemblage de sources d'éclairage incluent au moins deux aimants disposés de telle sorte que le premier assemblage de sources d'éclairage est monté magnétiquement et de manière amovible dans le boîtier de dispositif.

12. Procédé de fourniture d'une solution d'éclairage personnalisée, comprenant les étapes ci-dessous consistant à :
fournir un premier éclairage (209) présentant une température de couleur définissable ;
fournir un second éclairage (225) présentant un spectre à bande étroite relativement à un spectre à large bande du premier éclairage ;
décaler la température de couleur du premier éclairage (209) d'une manière sensiblement indépendante de la puissance, en combinant optiquement au moins une partie spectrale du premier éclairage et du second éclairage, dans lequel la combinaison optique de ladite au moins une partie spectrale du premier éclairage et du second éclairage (225) comprend la propagation de l'éclairage combiné le long d'un chemin de propagation coaxiale, et dans lequel un éclairage de sortie en provenance du dispositif d'éclairage présente une température de couleur corrélée (CCT) modifiée sélectivement qui est différente de la température de couleur du premier éclairage.

13. Procédé selon la revendication 12, comprenant en outre l'étape ci-dessous consistant à :
filtrer une partie du spectre à large bande du premier éclairage (209) qui coïncide avec le spectre à bande étroite du second éclairage (225).
